# EUROPÄISCHE PATENTSCHRIFT

(11) **EP 2 435 887 B1**
(45) Veröffentlichungstag und Bekanntmachung des Hinweises auf die Patenterteilung: **18.12.2013**
(21) Anmeldenummer: 10721296.1
(22) Anmeldetag: 26.05.2010
(51) Int. Cl.: G05D 23/275, F24D 19/10

(54) **VERBESSERTE BETÄTIGUNG EINER THERMOSTATVENTIL**
ENHANCED CONTROL OF A THERMOSTATIC VALVE
AMELIORATION DE LA COMMANDE D'UNE VANNE THERMOSTATIQUE

(30) Priorität: 26.05.2009 DE 102009022640
(43) Veröffentlichungstag der Anmeldung: 04.04.2012
(73) Patentinhaber: Danfoss A/S, 6430 Nordborg (DK)
(72) Erfinder: THORSEN, Jan, Eric, DK-6440 Augustenborg (DK); BENONYSSON, Atli, DK-6400 Sønderborg (DK); ZAGAR, Tomaz, 1357 Notranje Gorice (SI)
(86) Internationale Anmeldenummer: PCT/DK2010/000066
(87) Internationale Veröffentlichungsnummer: WO 2010/145656

(56) Entgegenhaltungen:
- WO-A1-2006/029629
- DE-C1- 19 618 093
- US-A- 3 196 685
- JÄTH & B MARTIN M: "fernverstellbares thermostatventil zentralgesteuert", HLH ZEITSCHRIFT FUR HEIZUNG, LUFTUNG, KLIMATECHNIK,HAUSTECHNIK, VDI VERLAG. DUSSELDORF, DE, Bd. 38, Nr. 1, 1. Januar 1987 (1987-01-01) , Seiten 7-10, XP002140302,

## Beschreibung

Die Erfindung betrifft eine Ventilanordnung mit einem Ventil, das einen Durchfluss eines Wärmeträgermediums durch eine Wärmetauscheranordnung, die eine Primärseite und eine Sekundärseite aufweist, steuert und einer Ventilbetätigungseinrichtung, die ein Thermostatelement aufweist, das durch eine Temperatur auf der Sekundärseite beaufschlagt und eine Temperatur- und/oder Druckbeeinflussungseinrichtung beaufschlagbar ist.

Eine derartige Ventilanordnung ist beispielsweise aus DE 24 21 810 A1 bekannt. Das Ventil ist hier als Heizkörperventil ausgebildet. Zur Erzielung einer Nachtabsenkung wird das Thermostatelement über eine Heizeinrichtung beheizt. Die Heizeinrichtung wirkt dabei auf ein Gehäuse des Ventils, von dem aus warme Luft das Thermostatelement erreicht.

DE 33 11 493 A1 zeigt eine Ventilanordnung, die ebenfalls als Heizkörperventil ausgebildet ist. Hier ist ein Thermostatelement vorgesehen, das nicht unmittelbar von der Raumtemperatur beeinflusst wird, sondern von einem elektrischen Heizelement. Dieses Heizelement wird über einen PI-Regler angesteuert, der seinerseits an einen Temperaturfühler mit Sollwerteinstellung angeschlossen ist.

DE 38 21 813 C1 offenbart ein für Heizungsanlagen geeignetes Thermostatventil, bei dem das wirksame Volumen des Thermostatelements durch eine Betätigungseinrichtung veränderbar ist, um eine Nachtabsenkung realisieren zu können, bei der Energie nur im Moment des Verstellvorgangs benötigt wird.

WO 2006/029629 offenbart einen Wärmetauscher mit einem Gehäuse, in dem eine Primärseite mit einem ersten Strömungspfad zwischen einem Vorlaufanschluss und einem Rücklaufanschluss und eine Sekundärseite mit einem zweiten Strömungspfad zwischen einem Zuflussanschluss und einem Ablaufanschluss angeordnet ist, und mit einem Ventil zur Steuerung eines Durchflusses eines Wärmeträgerfluids durch die Primärseite. Man möchte einen derartigen Wärmetauscher kompakt gestalten. Hierzu ist vorgesehen, dass das Ventil eine Betätigungseinrichtung mit einem Dehnstoffelement aufweist, das von der Temperatur auf der Sekundärseite beaufschlagt ist.

Ein weiteres Dokument (JÄTH & B MARTIN M: "Fernverstellbares Thermostatventil zentralgesteuert"HLH ZEITSCHRIFT FUR HEIZUNG, LUFTUNG, KLIMATECHNIK, HAUSTECHNIK, VDI VERLAG. DUSSELDORF, DE, Bd. 38, Nr. 1, 1. Januar 1987, Seiten 7-10, XP002140302) beschreibt die Verbesserung des Betriebs eines Thermostaten mit denselben Vorteilen wie WO 2006/029629, das heisst:
- die Benutzung einer Druckbeeinflussungseinrichdng die auf das Thermostat eines Ventils wirkt, ermöglicht die Aufhebung eines statischen Fehlers,
- die Druckbeeinflussungseinrichtung is direkt vom Druck am Vorlauf des Wärmemediums beeinflusst.

Die Verwendung von Thermostatelementen zur Steuerung von Ventilen, die den Strom eines Wärmeträgerfluids steuern, hat sich bewährt. Derartige Ventile, die im Folgenden kurz als "Thermostatventile" bezeichnet werden, finden nicht nur bei Wärmetauschern Anwendung, die als Heizkörper ausgebildet sind, sondern auch bei Wärmetauschern, die zur Brauchwassererwärmung vorgesehen sind. Bei derartigen Brauchwassererwärmern wird die Primärseite beispielsweise von einer Fernwärmeanlage oder auch von einer Heizungsanlage versorgt.

Thermostatventile bilden dabei einen Teil eines Regelkreises. Das Thermostatelement hat dabei den Vorteil, dass es relativ schnell auf Änderungen reagiert, beispielsweise Änderungen in der Umgebungstemperatur, die durch äußere Einflüsse bedingt sind. Beispielsweise kann sich die Temperatur in einem Raum nicht nur aufgrund der Wärmeabstrahlung vom Heizkörper verändern, sondern auch durch eine Sonneneinstrahlung oder eine größere Anzahl von Menschen in dem Raum.

Nachteilig bei Thermostatelementen ist die Tatsache, dass sie im Wesentlichen ein proportionales Regelverhalten zeigen. Dies hat zur Folge, dass in den meisten Fällen eine Regelabweichung bleibt, also ein Fehler, der den vorgegebenen Soll-Wert einer Temperatur vom tatsächlich erzielten Ist-Wert unterscheidet.

Man kann Ventile auch auf andere Weise steuern, beispielsweise durch einen Motor. Ein Motor hat in der Regel allerdings den Nachteil, dass er relativ langsam reagiert. Eine schnelle Reaktion kann man zwar durch einen großen Motor erreichen. Abgesehen von der Tatsache, dass auch damit vielfach noch nicht die gewünschte Geschwindigkeit realisierbar ist, hat ein Motor auch den Nachteil, dass er teuer ist und relativ viel Bauraum benötigt.

Der Erfindung liegt die Aufgabe zugrunde, bei schneller Reaktion ein gutes Regelverhalten zu erreichen.

Diese Aufgabe wird bei einer Ventilanordnung der eingangs genannten Art dadurch gelöst, dass die Temperatur- und/oder Druckbeeinflussungseinrichtung durch eine am Ventil oder der Wärmetauscheranordnung ermittelbare physikalische Größe beeinflusst ist.

Das Thermostatelement wird also nicht nur von der Temperatur auf der Sekundärseite gesteuert. Dies hätte die aufgrund der P-Regelcharakteristik entstehende bleibende Regelabweichung zur Folge. Man nimmt vielmehr zusätzlich Einfluss auf die Wirkung des Thermostatelements, indem man seine Temperatur und/oder den im Thermostatelement herrschenden Druck ändert. Diese Änderung erfolgt nicht zeitgesteuert, um eine Nachtabsenkung zu bewirken oder den Soll-Wert für eine Tagtemperatur wieder zu erhöhen. Die Beeinflussung erfolgt vielmehr mit dem Ziel, die Regelcharakteristik des Thermostatelements zu verändern, und zwar aufgrund von physikalischen Parametern, deren Änderungen dadurch berücksichtigt werden können.

Hierbei ist bevorzugt, dass eine Steuereinrichtung vorgesehen ist, die eine Regelabweichung am Ventil ermittelt und die Temperatur- und/oder Druckbeeinflussungseinrichtung in Abhängigkeit von der Regelabweichung steuert. Mit dieser Ausgestaltung bekommt man die Möglichkeit, in die Regelung eine Integral-Komponente einfließen zu lassen. In Abhängigkeit von der Art, wie die Steuereinrichtung arbeitet, ist es unter Umständen auch möglich, eine Differentialkomponente in die Regelung einfließen zu lassen. Man ist also in der Lage, eine PI-Regelung oder sogar eine PID-Regelung zu bewirken. Die für diese Regelung notwendigen physikalischen Größen lassen sich am Ventil oder der Wärmetauscheranordnung ohne Weiteres ermitteln.

So kann beispielsweise ein Drucksensor vorgesehen sein, der einen Druck im Thermostatelement ermittelt. Die Temperatur- und/oder Druckbeeinflussungseinrichtung reagiert auf den Druck im Thermostatelement. Mit diesem Ist-Druck lässt sich ein Soll-Druck vergleichen, der zu einer auf der Sekundärseite der Wärmetauscheranordnung herrschenden Temperatur korrelieren sollte. Wenn der Ist-Druck nicht mit dem Soll-Druck übereinstimmt, dann tritt die Temperatur- und/oder Druckbeeinflussungseinrichtung in Aktion und verändert den Druck im Thermostatelement, bis eine bessere Übereinstimmung erzielt worden ist. Auch wenn eine völlige Übereinstimmung der beiden Drücke vielfach nicht erreicht werden kann, wird die Regelcharakteristik des Thermostatelements doch stark verbessert.

Es kann auch vorgesehen sein, dass das Ventil eine Ventilspindel aufweist und ein Spindelsensor eine Position der Spindel ermittelt, wobei die Temperatur- und/oder Druckbeeinflussungseinrichtung auf einen Spindelversatz reagiert. Auch hier kann man dann den Spindelversatz, also die aktuelle Position eines Ventilelements gegenüber einem Ventilsitz, korrigieren, um eine bessere Übereinstimmung der Ist-Temperatur auf der Sekundärseite mit der Soll-Temperatur zu erreichen.

Auch kann vorgesehen sein, dass ein Temperatursensor auf der Sekundärseite der Wärmetauscheranordnung, der eine Ist-Temperatur ermittelt und ein Vergleicher, der eine Differenz zwischen der Ist-Temperatur und der Soll-Temperatur ermittelt, vorgesehen sind, wobei die Temperatur- und/oder Druck- beeinflussungseinrichtung auf die Differenz reagiert. Wenn das Thermostatelement bereits mit einem Fernfühler ausgerüstet ist, dann ist der Temperatursensor zusätzlich zu dem Fernfühler vorgesehen. Die Temperatur- und/oder Druckbeeinflussungseinrichtung wirkt dann ebenfalls auf das Thermostatelement in dem Sinn ein, die Regelabweichung zu vermindern.

Vorzugsweise weist das Thermostatelement einen nach außen geführten Anschluss auf, mit dem ein Zusatzbehälter verbunden ist, wobei die Temperatur- und/oder Druckbeeinflussungseinrichtung auf den Zusatzbehälter wirkt. Eine derartige Ausgestaltung kann unter mehreren Gesichtspunkten vorteilhaft sein. Wenn beispielsweise im Inneren eines Heizkörper-Thermostatventilaufsatzes nicht genügend Raum zur Verfügung steht, um die Temperatur- und/oder Druckbeeinflussungseinrichtung unterzubringen, kann es vorteilhaft sein, die Temperatur- und/oder Druckbeeinflussungseinrichtung an einer anderen Position anzuordnen. Ein weiterer Vorteil eines Zusatzbehälters besteht darin, dass hier ein größeres Volumen an Arbeitsmedium bereitgehalten werden kann, dessen Größe sich bei einer Temperaturänderung verändert. Man kann dann durch die Temperatur- und/oder Druckbeeinflussungseinrichtung bereits mit geringeren Druck-oder Temperaturänderungen eine große Wirkung am Thermostatelement selbst erzielen.

Vorzugsweise ist die Temperatur- und/oder Druckbeeinflussungseinrichtung in einem Wärme abgebenden Zustand und in einem Wärme aufnehmenden Zustand betreibbar. Die Temperatur- und/oder Druckbeeinflussungseinrichtung kann das Thermostatelement also kühlen, wenn sie Wärme aufnimmt oder heizen, wenn sie Wärme abgibt. Dies erweitert die Möglichkeiten der Beeinflussung des Thermostatelements zusätzlich.

Hierbei ist besonders bevorzugt, dass die Temperatur- und/oder Druckbeeinflussungseinrichtung ein Peltier-element aufweist. Ein Peltier-Element kann heizen oder kühlen, wobei man diese beiden Funktionen relativ einfach durch eine entsprechende Stromversorgung des Pelletier-Elements einstellen kann.

In einer besonders bevorzugten Ausgestaltung ist vorgesehen, dass die Wärmetauscheranordnung als Brauchwassererhitzer mit Primärzulauf und Primärablauf auf der Primärseite und Sekundärzulauf und Sekundärablauf auf der Sekundärseite ausgebildet ist, wobei am Sekundärablauf Brauchwasser mit erhöhter Temperatur abnehmbar ist. Die Temperatur des Brauchwassers wird durch einen Temperatursensor am Sekundärablauf ermittelt. Diese Temperatur steuert dann das Ventil, das auf der Primärseite angeordnet ist und zwar entweder im Primärzulauf oder im Primärablauf. Bei einem Brauchwassererhitzer ergeben sich zu Beginn eines Zapfvorganges für warmes Wasser relativ große Temperatursprünge. Diese Temperatursprünge können durch das Thermostatelement relativ schnell ausgeglichen werden. Zusätzlich wird die Temperatur- und/oder Druckbeeinflussungseinrichtung vorteilhaft eingesetzt, um die bleibende Regelabweichung zu vermindern.

Vorzugsweise ist die Temperatur- und/oder Druckbeeinflussungseinrichtung von einer Temperatur am Primärzulauf beeinflusst. Diese Temperatur ist dann die physikalische Größe an der Wärmetauscheranordnung, mit deren Hilfe die Regelabweichung vermindert wird.

Hierbei ist in einer besonders bevorzugten Ausgestaltung vorgesehen, dass die Temperatur- und/oder Druckbeeinflussungseinrichtung eine Wärme leitende Verbindung zwischen dem Primärzulauf und dem Thermostatelement aufweist. Die Temperatur vom Primärzulauf wird dann über die Wärme leitende Verbindung praktisch unmittelbar auf das Thermostatelement übertragen. Auf diese relativ einfache Weise wird dafür gesorgt, dass das Ventil ein verbessertes Ventilverhalten erhält.

Hierbei ist bevorzugt, dass die Wärme leitende Verbindung durch einen Metalldraht, insbesondere aus Kupfer, gebildet ist, der in Wärme leitendem Kontakt mit dem Primärzulauf und dem Thermostatelement steht. Im einfachsten Fall kann der Metalldraht einfach mehrfach um den Primärzulauf herumgewickelt sein und auch mehrfach um das Thermostatelement. Bei der Verwendung von Kupfer oder einem Metall mit ähnlich guten Wärmeleiteigenschaften lässt sich dann auf einfache Weise ein hervorragendes Regelverhalten realisieren.

In einer alternativen oder zusätzlichen Ausgestaltung kann die Wärme leitende Verbindung auch als Rohrleitung, insbesondere als Kapillarleitung, ausgebildet sein, die mit dem Primärzulauf verbunden ist. In diesem Fall nutzt man die Druckdifferenz über dem Wärmetauscher, um die Flüssigkeit durch die Rohrleitung zu treiben und so die Wärme zu transportieren.

Die Erfindung wird im Folgenden anhand von bevorzugten Ausführungsbeispielen in Verbindung mit einer Zeichnung beschrieben. Hierin zeigen:
- Fig. 1: eine schematische Darstellung einer Ventilanordnung,
- Fig. 2: eine Wärmetauscheranordnung mit einer Ventilanordnung,
- Fig. 2a: eine zu Fig. 2 abgewandelte Ausführungsform einer Wärmetauscheranordnung,
- Fig. 3: eine schematische Darstellung zur Erläuterung eines Offnungsverhaltens des Ventils und
- Fig. 4: eine schematische Darstellung zur Erläuterung eines abgewandelten Öffnungsverhaltens,
- Fig. 5: eine zu Fig. 1 abgewandelte Ausführungsform und
- Fig. 6: eine weitere Wärmetauscheranordnung.

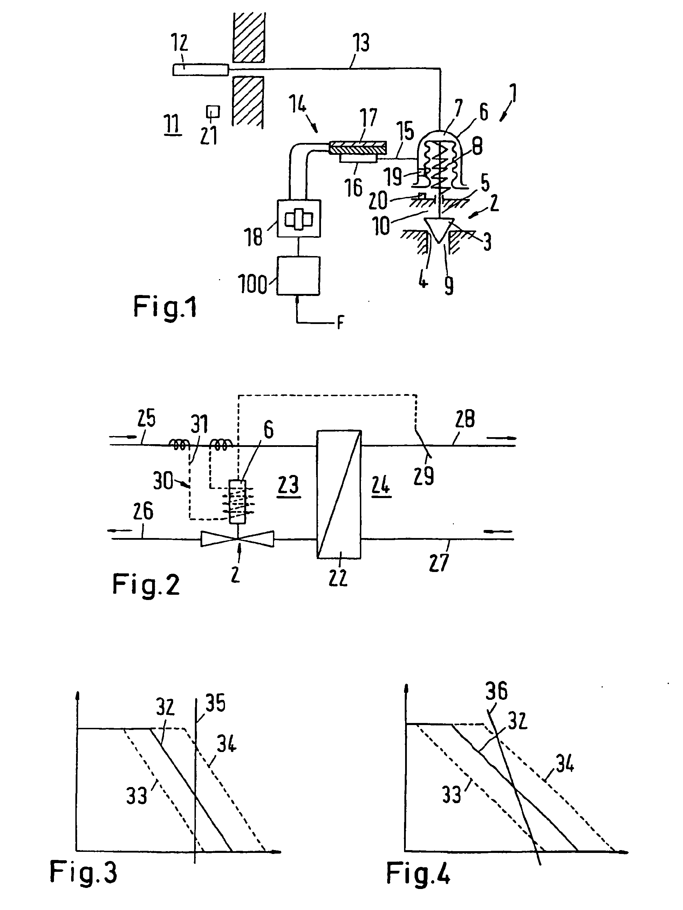

Eine Ventilanordnung 1 nach Fig. 1 weist ein Ventil 2 mit einem Ventilelement 3 und einem Ventilsitz 4 auf. Das Ventilelement 3 ist an einer Ventilspindel 5 befestigt. Die Ventilspindel 5 wird durch ein Thermostatelement 6 betätigt. Im Thermostatelement 6 ist ein Arbeitsmedium 7 angeordnet, dessen Volumen sich mit der Temperatur ändert. Das Arbeitsmedium 7 kann flüssig oder gasförmig oder eine Mischung aus Flüssigkeit und Gas sein. Es kann sich um einen Feststoff, wie Wachs, handeln. Auch ein absorbierendes Medium ist möglich. Die Aufzählung der Arten von Arbeitsmedien soll hier nicht abschließend sein.

Das Ventilelement 3 wird durch eine Öffnungsfeder 8 mit einer Kraft vom Ventilsitz 4 weg beaufschlagt. Der Druck im Thermostatelement 6 wirkt entgegen der Kraft der Öffnungsfeder in Schließrichtung.

Das Ventil 2 steuert den Strom eines Wärmeträgerfluids von einem Zulauf 9 in einen Ablauf 10, der in nicht näher dargestellter Weise mit einem Wärmetauscher, beispielsweise einem Heizkörper, Radiator oder Brauchwassererhitzer, verbunden ist. Die nachfolgende Erläuterung des Ausführungsbeispiels der Fig. 1 geht davon aus, dass dieser Heizkörper einen Raum 11 beheizt, in dem ein Fernfühler 12 angeordnet ist, der durch eine Kapillarleitung 13 mit dem Thermostatelement 6 verbunden ist. Wenn die Temperatur in dem Raum 11 steigt, dann dehnt sich das Arbeitsmedium 7 im Fernfühler 12 aus und wird durch die Kapillarleitung 13 in das Thermostatelement 6 verdrängt. Dadurch vergrößert sich das Volumen innerhalb des Thermostatelements 6, so dass die Ventilspindel 5 das Ventilelement 3 weiter an den Ventilsitz 4 annähert und den Zustrom von Wärmeträgerfluid in den Wärmetauscher drosselt. Dementsprechend steigt die Temperatur im Raum 11 nicht weiter oder sinkt sogar. Wenn die Temperatur im Raum 11 sinkt, dann nimmt das Volumen des Arbeitsmediums 7 im Fernfühler 12 ab, so dass die Öffnungsfeder 8 das Ventilelement 3 wieder weiter vom Ventilsitz 4 entfernen kann. Dadurch steigt der Zustrom von Wärmeträgerfluid.

Wenn das Thermostatelement 6 in dem Raum 11 angeordnet ist, ist ein Fernfühler 12 vielfach entbehrlich.

Ein derartiges Thermostatelement wirkt als proportionaler Regler (P-Regler). Ein derartiger P-Regler hat eine bleibende Regelabweichung.

Um diese bleibende Regelabweichung zu vermindern, ist eine Temperatur- und/oder Druckbeeinflussungseinrichtung 14 vorgesehen, die auf das Thermostatelement 6 oder einen damit über eine Leitung 15 verbundenen Zusatzbehälter 16 wirkt. Der Zusatzbehälter 16 enthält ebenfalls Arbeitsmedium 7.

Der Zusatzbehälter 16 steht in Verbindung mit einem Peltier-Element 17, das von einer Steuereinrichtung 18 angesteuert wird. Das Peltier-Element 17 kann den Zusatzbehälter 16 sowohl beheizen, wenn es Wärme abgibt, als auch kühlen, wenn es Wärme aufnimmt. Das Peltier-Element 17 kann auch in einen neutralen Zustand versetzt werden, in dem es vom Zusatzbehälter 16 weder Wärme aufnimmt noch Wärme an ihn abgibt.

Die Steuereinrichtung 18 ihrerseits wird mit einem Fehler F beaufschlagt, was hier schematisch dargestellt ist. Dieser Fehler ist im Allgemeinen eine Regelabweichung, die durch das Thermostatelement 6 verursacht ist. Konkretisiert werden kann der Fehler F auf unterschiedliche Weise. Man kann im Thermostatelement 6 einen Drucksensor 19 anordnen, der den Druck im Arbeitsmedium 7 ermittelt. Man kann einen Spindelsensor 20 verwenden, der die Position der Spindel 5 und damit einen Spindelversatz ermittelt, d.h. einen Unterschied zwischen einer zu erwartenden Soll-Position der Spindel 5 und einer tatsächlich vorhandenen Position der Spindel 5. Man kann auch einen zusätzlichen Temperatursensor 21 verwenden, der die Ist-Temperatur im Raum 11 ermittelt und sie mit einer Soll-Temperatur vergleicht. Die drei Sensoren 19-21 stehen mit der Steuereinrichtung 18 in Verbindung, wobei diese Verbindungen aus Gründen der Übersicht hier nicht dargestellt sind. Eine Box 100 soll die Position darstellen, an der einer oder mehrere der Sensoren 19-21 schaltungstechnisch relativ zur Steuereinrichtung 18 dargestellt sind.

Natürlich kann man das Peltier-Element 17 (oder auch eine andere Temperiereinrichtung) auch unmittelbar an dem Thermostatelement 6 anordnen. In diesem Fall kann man ebenfalls die Wirkung des Thermostatelements 6 unabhängig von der Beeinflussung durch die Temperatur im Raum 11 verändern. Insbesondere kann man einen durch eine bleibende Regelabweichung bedingten Fehler verkleinern. Trotzdem bleibt die schnelle Reaktion, die ein Thermostatelement 6 auszeichnet, auch für die Regelung des Ventils 2 erhalten.

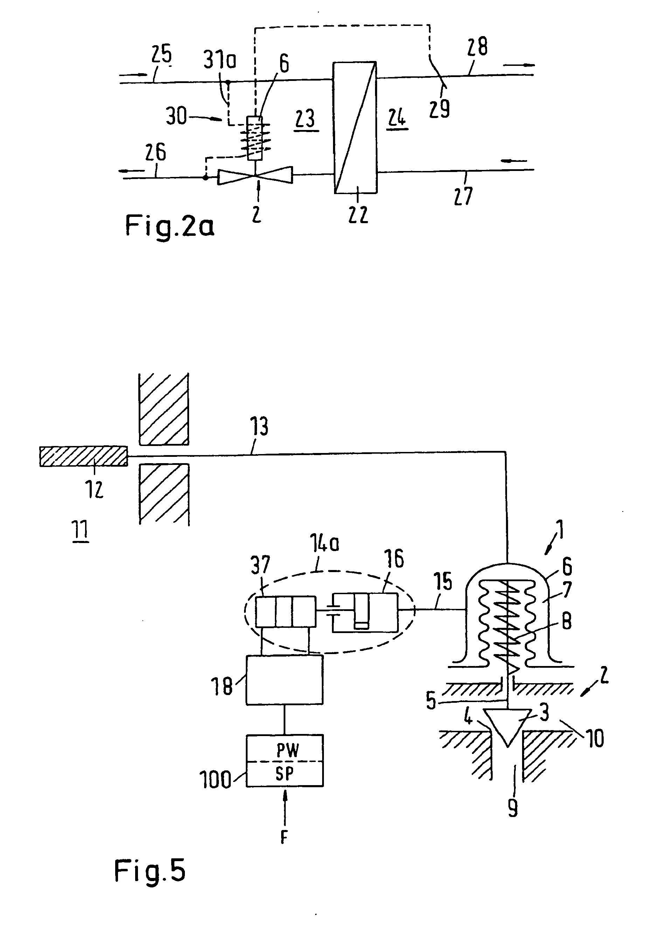

Fig. 2 zeigt eine Ausgestaltung, bei der das Ventil 2, das hier nur schematisch dargestellt ist, in Verbindung mit einem Brauchwassererhitzer 22 dargestellt ist. Der Brauchwassererhitzer 22 ist ein Wärmetauscher mit einer Primärseite 23 und einer Sekundärseite 24. Die Primärseite 23 weist einen Primärzulauf 25 und einen Primärablauf 26 auf. Die Sekundärseite weist einen Sekundärzulauf 27 und einen Sekundärablauf 28 auf. Die Primärseite 23 steht beispielsweise mit einem Fernwärmenetz oder einer Haus-Heizungsanlage in Verbindung. An der Sekundärseite 24 kann ein Verbraucher warmes Wasser entnehmen.

Im Sekundärablauf 28 ist ein Temperatursensor 29 angeordnet, der mit dem Thermostatelement 6 verbunden ist. Wenn ein Verbraucher warmes Wasser zapft, dann sinkt die Temperatur am Sekundärablauf 28 ab und das Ventil 2 öffnet stärker, so dass auf der Primärseite 23 ein verstärkter Durchfluss von Heizfluid erfolgen kann.

Eine Wärme leitende Verbindung 30 ist zwischen dem Primärzulauf 25 und dem Thermostatelement 6 eingerichtet. Die Wärme leitende Verbindung 30 ist im einfachsten Fall durch einen Kupferdraht 31 oder einen Draht aus einem anderen gut Wärme leitenden Material gebildet, der um den Primärzulauf 25 gewickelt ist und auch um das Thermostatelement 6. Sie kann auch durch eine mit Wasser oder einem anderen Fluid gefüllte Leitung 31a (Fig. 2a) gebildet sein, wobei das Fluid den Wärmetransport übernimmt, beispielsweise ebenfalls durch Wärmeleitung oder durch Konvektion. Dadurch erhält das Thermostatelement 6 etwa die Temperatur des Primärzulaufs 25. In Fig. 2a sind gleiche und funktionsgleiche Elemente wie in Fig. 2 mit den gleichen Bezugszeichen versehen. Das Fluid kann mit Hilfe der Druckdifferenz über den Wärmetauscher 22 durch die Kapillarleitung 31a getrieben werden.

Die Funktion soll nun anhand der Figuren 3 und 4 näher erläutert werden. Fig. 3 und 4 zeigen eine Ventilcharakteristik mit der Sensortemperatur entlang der X-Achse und dem Öffnungsgrad entlang der Y-Achse. In Fig. 3 zeigt eine Linie 32 (durchgezogen) das normale Betriebsverhalten des Thermostatelements 6. Wenn man die Temperatur des Thermostatelements 6 erhöht, dann verschiebt sich die Linie 32 zur Linie 33. Wenn man die Temperatur des Thermostatelements absenkt, dann verschiebt sich die Linie 32 zur Linie 34. In Abhängigkeit vom Betriebspunkt des Thermostatelements (beispielsweise dem Punkt, an dem das Ventil 2 öffnet) kann die Temperatur des Thermostatelements 6 so eingestellt werden, dass die Temperatur am Sekundärablauf 28, die durch den Temperatursensor ermittelt wird, für alle Betriebspunkte gleich ist. Dies ist durch eine vertikale Linie 35 dargestellt.

Die Einführung eines I-Glieds in der Form einer Temperaturänderung des Thermostatelements 6 ermöglicht eine Reduzierung der Verstärkung im Regelkreis ohne eine Erhöhung der bleibenden Abweichung. In anderen Worten wird die Temperaturabweichung des gezapften Wassers am Sekundärablauf 28 geringer oder verschwindet sogar ganz. Dies wiederum führt zu einer erhöhten Stabilität des Regelkreises. Dies ist in Fig. 4 dargestellt. Auch hier zeigt eine Linie 32 den normalen Betriebszustand des Thermostatelements 6, eine Linie 33 das Betriebsverhalten bei einer erhöhten Temperatur des Thermostatelements 6 und eine Linie 34 das Betriebsverhalten bei einer verringerten Temperatur des Thermostatelements 6. Nach rechts ist in den Figuren 3 und 4 die Temperatur des Sensors 29 aufgetragen und nach oben der Durchfluss auf der Primärseite 23. Es ist zu erkennen, dass die Linie 36 eine Neigung aufweist, d.h. die Temperaturabweichung des gezapften Warmwassers am Sekundärablauf ist größer als bei der Ausgestaltung nach Fig. 3. Sie ist allerdings noch in einem tolerierbaren Bereich.

Fig. 5 zeigt in schematischer Darstellung eine Ventilanordnung, die im Wesentlichen der nach Fig. 1 entspricht. Gleiche und funktionsgleiche Elemente sind daher mit den gleichen Bezugszeichen versehen.

Abgewandelt ist die Beeinflussungseinrichtung 14a für das Thermostatelement 6, das bei dieser Ausgestaltung nur den Druck des Arbeitsmediums 7 im Thermostatelement 6 beeinflusst. Hierzu ist der Zusatzbehälter 16 mit einer nur schematisch dargestellten Druckbeeinflussungseinrichtung 37 verbunden, die wiederum von der Steuereinrichtung 18 angesteuert wird. Die Druckbeeinflussungseinrichtung 37 beeinflusst den Druck des Arbeitsmediums 7 im Thermostatelement 6. Hierzu kann sie beispielsweise ein mit dem Arbeitsmedium 7 gefülltes Volumen im Zusatzbehälter 16 verändern. Die Druckbeeinflussungseinrichtung 37 kann unterschiedliche Ausgestaltungen haben. Sie kann beispielsweise als Pumpe, Servo-Aktuator oder Membran-Aktuator ausgebildet sein.

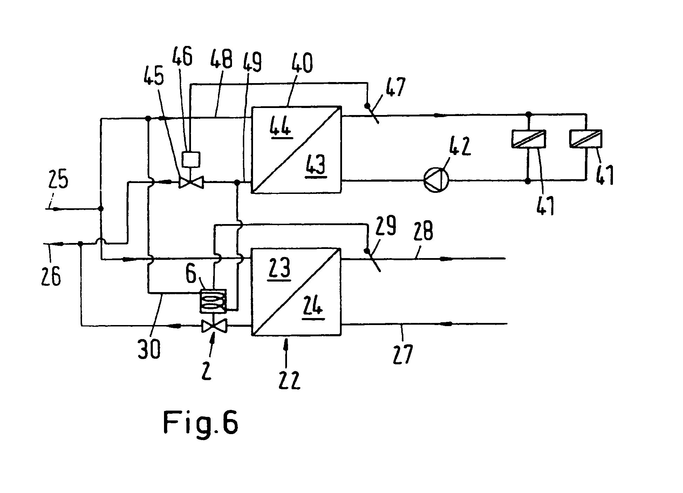

Fig. 6 zeigt eine Ausgestaltung, die eine Weiterentwicklung der Ausgestaltung nach Fig. 2 ist. Gleiche Elemente wie in Fig. 2 sind daher mit den gleichen Bezugszeichen versehen.

Die Wärmetauscheranordnung nach Fig. 6 weist neben dem Brauchwassererhitzer 22 einen weiteren Wärmetauscher 40 auf, der zur Versorgung von Radiatoren 41 in einer Heizungsanlage vorgesehen ist. Eine Pumpe 42 erzeugt einen Zwangsumlauf von Wärmeträgerflüssigkeit durch die Radiatoren 41 und die Sekundärseite 43 des Wärmetauschers 40. Die Primärseite 44 des Wärmetauschers 40 ist ebenfalls mit dem Primärzulauf 25 und dem Primärablauf 26 verbunden, die beispielsweise zu einem Fernwärmenetz gehören.

Der Strom des Wärmeträgers auf der Primärseite 44 wird durch ein Ventil 45 gesteuert, das wiederum durch ein Thermostatelement 46 oder auf andere Weise, beispielsweise einen elektrisch angetriebenen Motor, betätigt wird. Das Thermostatelement 46 wird durch einen Temperatursensor 47 auf der Sekundärseite 43 beeinflusst.

Das Thermostatelement 6, das das Ventil 2 für den Brauchwassererhitzer 22 steuert, wird über die Wärme leitende Verbindung 30 allerdings mit dem Primärzulauf 48 und dem Primärablauf 49 verbunden und daher mit der Wärme von der Primärseite 44 des Wärmetauschers 40 beaufschlagt. Damit lässt sich in vorteilhafter Weise berücksichtigen, dass es bei einer Fernwärmeheizung unterschiedliche Temperaturverhältnisse im Sommer und im Winter gibt.

So beträgt beispielsweise die Temperatur des Wärmeträgers eines Fernwärmenetzes im Winter 100°C. Darüber hinaus müssen die Radiatoren 41 mit Wärme versorgt werden, so dass der Wärmetauscher 40 aktiv ist. Da die Wärme leitende Verbindung 30 die Primärseite 44 des Wärmetauschers 40 mit dem Thermostatelement 6 des Ventils 2 für den Brauchwassererhitzer 22 beaufschlagt, ergibt dies eine abnehmende Temperaturabweichung für den Thermostat des gesteuerten Regelkreises und damit ein vergrößertes P-Band.

Im Sommer ist die Temperatur des Wärmeträgermediums des Fernwärmeheizungsnetzes typischerweise niedriger. Sie beträgt beispielsweise 65°C. Im Sommer sind die Radiatoren 41 nicht in Betrieb. Dementsprechend muss auch der Wärmetauscher 40 nicht arbeiten, weil es praktisch keinen Wärmebedarf gibt, um ein Haus zu beheizen. Dies bedeutet, dass das Thermostatelement 6 nicht über die Primärseite 44 des Wärmetauschers 40 beheizt wird. Somit ergibt sich hier eine normale Regelabweichung.

## Patentansprüche

1. Ventilanordnung mit einem Ventil, das einen Durchfluss eines Wärmeträgermediums durch eine Wärmetauscheranordnung, die eine Primärseite und eine Sekundärseite aufweist, steuert und einer Ventilbetätigungseinrichtung, die ein Thermostatelement aufweist, das durch eine Temperatur auf der Sekundärseite beaufschlagt ist und durch eine Temperatur- und/oder Druckbeeinflussungseinrichtung beaufschlagbar ist, und die Temperatur- und/oder Druckbeeinflussungseinrichtung (14, 30) durch eine am Ventil (2) oder der Wärmetauscheranordnung (22) ermittelbare physikalische Größe beeinflusst ist,
**dadurch gekennzeichnet, dass** eine Steuereinrichtung (18) vorgesehen ist, die eine Regelabweichung am Ventil (2) ermittelt und die Temperatur- und/oder Druckbeeinflussungseinrichtung (14) in Abhängigkeit von der Regelabweichung steuert.

2. Ventilanordnung nach Anspruch 1, **dadurch gekennzeichnet, dass** ein Drucksensor (19) vorgesehen ist, der einen Druck im Thermostatelement (6) ermittelt und die Temperatur- und/oder Druckbeeinflussungseinrichtung (14) auf den Druck reagiert.

3. Ventilanordnung nach einem der Ansprüche 1 oder 2, **dadurch gekennzeichnet, dass** das Ventil (2) eine Ventilspindel (5) aufweist und ein Spindelsensor (20) eine Position der Spindel ermittelt und die Temperatur- und/oder Druckbeeinflussungseinrichtung (14) auf einen Spindelversatz reagiert.

4. Ventilanordnung nach einem der Ansprüche 1 bis 3, **dadurch gekennzeichnet, dass** ein Temperatursensor (21) auf der Sekundärseite (11, 24) der Wärmetauscheranordnung, der eine Ist-Temperatur ermittelt, und ein
Vergleicher, der eine Differenz zwischen der Ist-Temperatur und der Soll-Temperatur ermittelt, vorgesehen sind, wobei die Temperatur- und/oder Druckbeeinflussungseinrichtung (14) auf die Differenz reagiert.

5. Ventilanordnung nach einem der Ansprüche 1 bis 4, **dadurch gekennzeichnet, dass** das Thermostatelement (6) einen nach außen geführten Anschluss (15) aufweist, mit dem ein Zusatzbehälter (16) verbunden ist, wobei die Temperatur- und/oder Druckbeeinflussungseinrichtung (14) auf den Zusatzbehälter (16) wirkt.

6. Ventilanordnung nach einem der Ansprüche 1 bis 5, **dadurch gekennzeichnet, dass** die Temperatur- und/oder Druckbeeinflussungseinrichtung (14) in einem Wärme abgebenden Zustand und in einem Wärme aufnehmenden Zustand betreibbar ist.

7. Ventilanordnung nach Anspruch 6, **dadurch gekennzeichnet, dass** die Temperatur- und/oder Druckbeeinflussungseinrichtung (14) als Peltier-Element ausgebildet ist.

8. Ventilanordnung nach einem der Ansprüche 1 bis 7, **dadurch gekennzeichnet, dass** die Wärmetauscheranordnung als Brauchwassererhitzer (22) mit Primärzulauf (25) und Primärablauf (26) auf der Primärseite (23) und Sekundärzulauf (27) und Sekundärablauf (28) auf der Sekundärseite (24) ausgebildet ist, wobei am Sekundärablauf (28) Brauchwasser mit erhöhter Temperatur abnehmbar ist.

9. Ventilanordnung nach Anspruch 8, **dadurch gekennzeichnet, dass** die Temperatur- und/oder Druckbeeinflussungseinrichtung (30) von einer Temperatur am Primärzulauf (25) beeinflusst ist.

10. Ventilanordnung nach Anspruch 9, **dadurch gekennzeichnet, dass** die Temperatur- und/oder Druckbeeinflussungseinrichtung (30) eine Wärme leitende Verbindung (31) zwischen dem Primärzulauf (25) und dem Thermostatelement (6) aufweist.

11. Ventilanordnung nach Anspruch 9 oder 10, **dadurch gekennzeichnet, dass** die Wärme leitende Verbindung (31) als Rohrleitung, insbesondere als Kapillarleitung, ausgebildet ist, die mit dem Primärzulauf (25) verbunden ist.

12. Ventilanordnung nach Anspruch 10, **dadurch gekennzeichnet, dass** die Wärme leitende Verbindung (31) durch einen Metalldraht, insbesondere aus Kupfer, gebildet ist, der in Wärme leitendem Kontakt mit dem Primärzulauf (25) und dem Thermostatelement (6) steht.

## Claims

1. Valve arrangement with a valve controlling a flow of a heat carrying medium through a heat exchanger arrangement that comprises a primary side and a secondary side, and with a valve actuating arrangement that comprises a thermostatic element that is acted upon by a temperature on the secondary side and can be acted upon by a temperature and/or pressure influencing arrangement, the temperature and/or pressure influencing arrangement (14, 30) being influenced by a physical value that can be measured at the valve (2) or the heat exchanger arrangement (22), **characterised in that** a control arrangement (18) is provided to detect a control deviation at the valve (2) and to control the temperature and/or pressure influencing arrangement (14) in dependence of the control deviation.

2. Valve arrangement according to claim 1, **characterised in that** a pressure sensor (19) is provided to measure a pressure in the thermostatic element (6), the temperature and/or pressure influencing arrangement (14) reacting to the pressure.

3. Valve arrangement according to one of the claims 1 or 2, **characterised in that** the valve (2) comprises a valve spindle (5) and a spindle sensor (20) detects a position of the spindle, the temperature and/or pressure influencing arrangement (14) reacting to a spindle displacement.

4. Valve arrangement according to one of the claims 1 to 3, **characterised in that** on the secondary side (11, 24) of the heat exchanger arrangement a temperature sensor (21) is provided to determine an actual temperature, and a comparator is provided to determine a difference between the actual temperature and the desired temperature, **characterised in that** the temperature and/or pressure influencing arrangement (14) reacts to the difference.

5. Valve arrangement according to one of the claims 1 to 4, **characterised in that** the thermostatic element (6) comprises a connection (15) that is led to the outside and to which an additional tank (16) is connected, the temperature and/or pressure influencing arrangement (14) acting upon the additional tank (16).

6. Valve arrangement according to one of the claims 1 to 5, **characterised in that** the temperature and/or pressure influencing arrangement (14) can be operated in a heat supplying state and in a heat receiving state.

7. Valve arrangement according to claim 6, **characterised in that** the temperature and/or pressure influencing arrangement (14 is made as a Peltier element.

8. Valve arrangement according to one of the claims 1 to 7, **characterised in that** the heat exchanger arrangement is made as a domestic water heater (22) with a primary inlet (25) and a primary outlet (26) on the primary side and a secondary inlet (27) and a secondary outlet (28) on the secondary side (24), the secondary outlet (28) supplying domestic water with increased temperature.

9. Valve arrangement according to claim 8, **characterised in that** the temperature and/or pressure influencing arrangement (30) is influenced by a temperature at the primary inlet (25).

10. Valve arrangement according to claim 9, **characterised in that** the temperature and/or pressure influencing arrangement (30) comprises a heat conducting connection (31) between the primary inlet (25 and the thermostatic element (6).

11. Valve arrangement according to claim 9 or 10, **characterised in that** the heat conducting connection (31) is made as a tube, preferably as a capillary tube, that is connected to the primary inlet (25).

12. Valve arrangement according to claim 10, **characterised in that** the heat conducting connection (31) is formed by a metal wire, in particular copper, that is in heat conducting contact with the primary inlet (25) and the thermostatic element (6).

## Revendications

1. Agencement de soupape équipé d'une soupape commandant une circulation d'un fluide de transfert de chaleur à travers un ensemble d'échange thermique comprenant un côté primaire et un côté secondaire, et d'un dispositif d'actionnement de la soupape qui est muni d'un élément thermostatique sollicité par une température régnant du côté secondaire, et pouvant être sollicité par un dispositif d'influence de la température et/ou de la pression, ledit dispositif (14, 30) d'influence de la température et/ou de la pression étant influencé par une grandeur physique qui peut être déterminée au niveau de la soupape (2) ou de l'ensemble (22) d'échange thermique,
**caractérisé par le fait qu'**il est prévu un dispositif de commande (18) définissant un écart de réglage au niveau de la soupape (2) et pilotant, en fonction dudit écart de réglage, le dispositif (14) d'influence de la température et/ou de la pression.

2. Agencement de soupape selon la revendication 1, **caractérisé par le fait qu'**il est prévu un capteur de pression (19) qui détermine une pression régnant dans l'élément thermostatique (6), le dispositif (14) d'influence de la température et/ou de la pression réagissant à ladite pression.

3. Agencement de soupape selon l'une des revendications 1 ou 2, **caractérisé par le fait que** la soupape (2) présente une tige (5), un détecteur (20) déterminant une position de ladite tige, et le dispositif (14) d'influence de la température et/ou de la pression réagissant à un décalage de ladite tige.

4. Agencement de soupape selon l'une des revendications 1 à 3, **caractérisé par le fait qu'**il est prévu un capteur de température (21) situé du côté secondaire (11, 24) de l'ensemble d'échange thermique et définissant une température réelle, et un comparateur établissant une différence entre la température réelle et la température de consigne, le dispositif (14) d'influence de la température et/ou de la pression réagissant à ladite différence.

5. Agencement de soupape selon l'une des revendications 1 à 4, **caractérisé par le fait que** l'élément thermostatique (6) comporte un raccord (15) qui relié à l'extérieur et auquel un récipient additionnel (16) est relié, le dispositif (14) d'influence de la température et/ou de la pression agissant sur ledit récipient additionnel (16).

6. Agencement de soupape selon l'une des revendications 1 à 5, **caractérisé par le fait que** le dispositif (14) d'influence de la température et/ou de la pression peut être actionné dans un état d'émission de chaleur et dans un état de réception de chaleur.

7. Agencement de soupape selon la revendication 6, **caractérisé par le fait que** le dispositif (14) d'influence de la température et/ou de la pression est réalisé sous la forme d'un élément de Peltier.

8. Agencement de soupape selon l'une des revendications 1 à 7, **caractérisé par le fait que** l'ensemble d'échange thermique est réalisé sous la forme d'un chauffe-eau sanitaire (22) comprenant une arrivée primaire (25) et une sortie primaire (26) du côté primaire (23), et une arrivée secondaire (27) et une sortie secondaire (28) du côté secondaire (24), de l'eau sanitaire à température accrue pouvant être soutirée au niveau de ladite sortie secondaire (28).

9. Agencement de soupape selon la revendication 8, **caractérisé par le fait que** le dispositif (30) d'influence de la température et/ou de la pression est influencé par une température régnant au niveau de l'arrivée primaire (25).

10. Agencement de soupape selon la revendication 9, **caractérisé par le fait que** le dispositif (30) d'influence de la température et/ou de la pression présente une jonction (31) conduisant la chaleur entre l'arrivée primaire (25) et l'élément thermostatique (6).

11. Agencement de soupape selon la revendication 9 ou 10, **caractérisé par le fait que** la jonction (31) conduisant la chaleur est réalisée sous la forme d'un conduit tubulaire, en particulier d'un conduit capillaire raccordé à l'arrivée primaire (25).

12. Agencement de soupape selon la revendication 10, **caractérisé par le fait que** la jonction (31) conduisant la chaleur est formée d'un fil métallique, notamment en du cuivre, en contact de conduction thermique avec l'arrivée primaire (25) et l'élément thermostatique (6).
